# EUROPEAN PATENT APPLICATION

(11) **EP 4 648 523 A1**
(43) Date of publication of application: **12.11.2025**
(21) Application number: 24738766.5
(22) Date of filing: 05.01.2024
(51) Int. Cl.: H04W 72/231, H04W 72/232, H04W 72/04

(54) **METHOD AND DEVICE FOR UPLINK AND DOWNLINK TRANSMISSION AND RECEPTION IN FULL-DUPLEX COMMUNICATION**

(30) Priority: 05.01.2023 KR 20230001985; 04.01.2024 KR 20240001787
(71) Applicant: KT Corporation, Seongnam-si, Gyeonggi-do 13606 (KR)
(72) Inventor: PARK, Kyu Jin, Seongnam-si Gyeonggi-do 13606 (KR)
(74) Representative: Santarelli
(86) International application number: PCT/KR2024/000292
(87) International publication number: WO 2024/147698

(57) **Abstract**

Provided is a method for performing, by a terminal, uplink transmission or downlink reception in full-duplex communication. The method may include receiving configuration information about a downlink slot and a downlink symbol and an uplink slot and an uplink symbol receiving configuration information about a subband for full-duplex communication, and configuration information about an SBFD slot or an SBFD symbol and performing, on the basis of transmission direction link configuration information in the SBFD slot or SBFD symbol, uplink transmission or downlink reception.

## Description

### Technical Field

The disclosure relates to methods and devices for uplink and downlink transmission/reception in the next-generation radio access network (hereinafter, "new radio (NR)").

### Background Art

Recently, the 3rd generation partnership project (3GPP) has approved the "Study on New Radio Access Technology", which is a study item for research on next-generation/5G radio access technology(hereinafter, referred to as "new radio" or "NR"). On the basis of the Study on New Radio Access Technology, Radio Access Network Working Group 1 (RAN WG1) has been discussing frame structures, channel coding and modulation, waveforms, multiple access methods, and the like for the new radio (NR). It is required to design the NR not only to provide an improved data transmission rate as compared with the long term evolution (LTE)/LTE-Advanced, but also to meet various requirements in detailed and specific usage scenarios.

An enhanced mobile broadband (eMBB), massive machine-type communication (mMTC), and ultra reliable and low latency communication (URLLC) are proposed as representative usage scenarios of the NR. In order to meet the requirements of the individual scenarios, it is required to design the NR to have flexible frame structures, compared with the LTE/LTE-Advanced.

Because the requirements for data rates, latency, reliability, coverage, etc. are different from each other, there is a need for a method for efficiently multiplexing a radio resource unit based on different numerologies from other (e.g., subcarrier spacing, subframe, Transmission Time Interval (TTI), etc.) as a method for efficiently satisfying each usage scenario requirement through a frequency band constituting any NR system.

As part of this aspect, there is a need for a specific design that enables uplink and downlink transmission and reception within a symbol where full-duplex communication is applied in a wireless network.

### Detailed Description of the Invention

### Technical Problem

The disclosure may provide a method and device for uplink and downlink transmission/reception in full-duplex communication.

### Technical Solution

In an aspect, the disclosure may provide a method for performing uplink transmission or downlink reception by a user equipment (UE) in full-duplex communication. The method may include receiving configuration information about a downlink slot and a downlink symbol and an uplink slot and an uplink symbol, receiving configuration information about a subband and configuration information about a subband full duplex (SBFD) slot or an SBFD symbol for the full-duplex communication, and performing uplink transmission or downlink reception based on transmission direction link configuration information in the SBFD slot or the SBFD symbol.

In another aspect, the disclosure may provide a method for performing uplink reception or downlink transmission by a base station in full-duplex communication. The method may include transmitting configuration information about a downlink slot and a downlink symbol and an uplink slot and an uplink symbol, transmitting configuration information about a subband and configuration information about a subband full duplex (SBFD) slot or an SBFD symbol for the full-duplex communication, and performing uplink reception or downlink transmission based on transmission direction link configuration information in the SBFD slot or the SBFD symbol.

In another aspect, the disclosure may provide a UE performing uplink transmission or downlink reception in full-duplex communication. The UE may include a transmitter, a receiver, and a controller controlling an operation of the transmitter and the receiver, wherein the controller: receives configuration information about a downlink slot and a downlink symbol and an uplink slot and an uplink symbol, receives configuration information about a subband and configuration information about a subband full duplex (SBFD) slot or an SBFD symbol for the full-duplex communication, and performs uplink transmission or downlink reception based on transmission direction link configuration information in the SBFD slot or the SBFD symbol.

In another aspect, the disclosure may provide a base station performing uplink reception or downlink transmission in full-duplex communication. The base station may include a transmitter, a receiver, and a controller controlling an operation of the transmitter and the receiver, wherein the controller transmits configuration information about a downlink slot and a downlink symbol and an uplink slot and an uplink symbol, transmits configuration information about a subband and configuration information about a subband full duplex (SBFD) slot or an SBFD symbol for the full-duplex communication, and performs uplink reception or downlink transmission based on transmission direction link configuration information in the SBFD slot or the SBFD symbol.

### Advantageous Effects

According to the embodiments of the disclosure, uplink and downlink transmission/reception may be efficiently performed within a slot or symbol where full-duplex communication is applied.

### Brief Description of Drawings

FIG. 1 is a view schematically illustrating an NR wireless communication system in accordance with embodiments of the present disclosure.
FIG. 2 is a view schematically illustrating a frame structure in an NR system in accordance with embodiments of the present disclosure.
FIG. 3 is a view for explaining resource grids supported by a radio access technology in accordance with embodiments of the present disclosure.
FIG. 4 is a view for explaining bandwidth parts supported by a radio access technology in accordance with embodiments of the present disclosure.
FIG. 5 is a view illustrating an example of a synchronization signal block in a radio access technology in accordance with embodiments of the present disclosure.
FIG. 6 is a signal diagram for explaining a random access procedure in a radio access technology in accordance with embodiments of the present disclosure.
FIG. 7 is a view for explaining CORESET.
FIG. 8 is a flowchart illustrating a procedure of performing uplink transmission and downlink reception by a UE according to an embodiment.
FIG. 9 is a flowchart illustrating a procedure of performing uplink reception and downlink transmission by a base station according to an embodiment.
FIGS. 10 and 11 are views illustrating a TDD frame in which an uplink subband is configured in a downlink slot according to an embodiment.
FIG. 12 is a view illustrating a configuration of transmission direction link configuration information in an SBFD symbol according to an embodiment.
FIG. 13 is a block diagram illustrating a UE according to an embodiment.
FIG. 14 is a block diagram illustrating a base station according to an embodiment.

### Mode for Carrying out the Invention

Hereinafter, some embodiments of the present disclosure will be described in detail with reference to the accompanying illustrative drawings. In the drawings, like reference numerals are used to denote like elements throughout the drawings, even if they are shown on different drawings. Further, in the following description of the present disclosure, a detailed description of known functions and configurations incorporated herein will be omitted when it may make the subject matter of the present disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the present disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

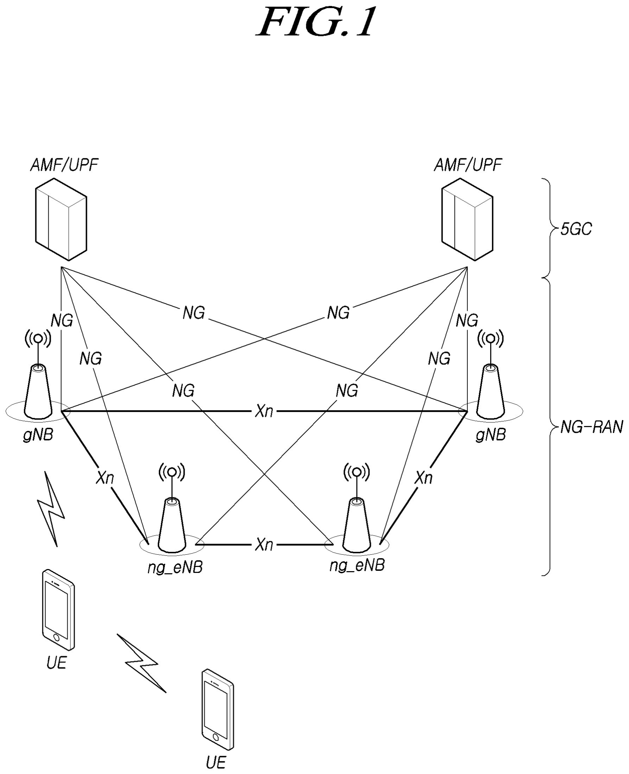

FIG. 1 is a view schematically illustrating an NR system to which the present embodiment is applicable.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

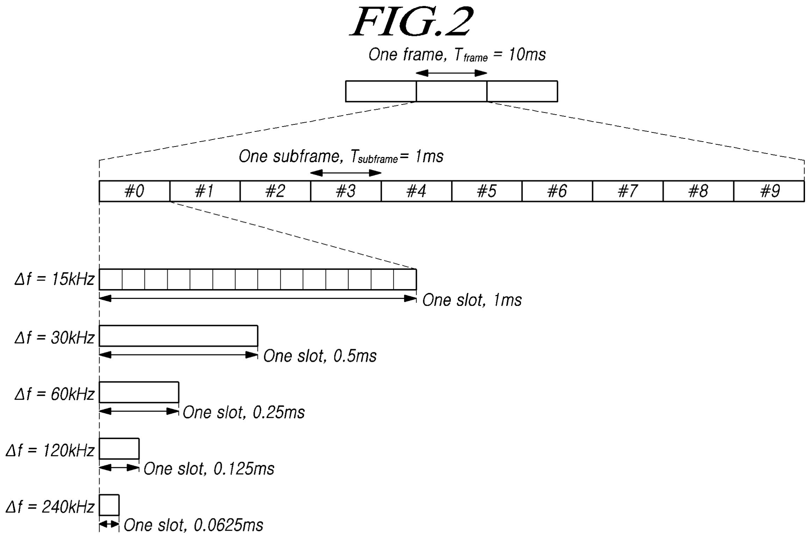

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 12, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied. Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

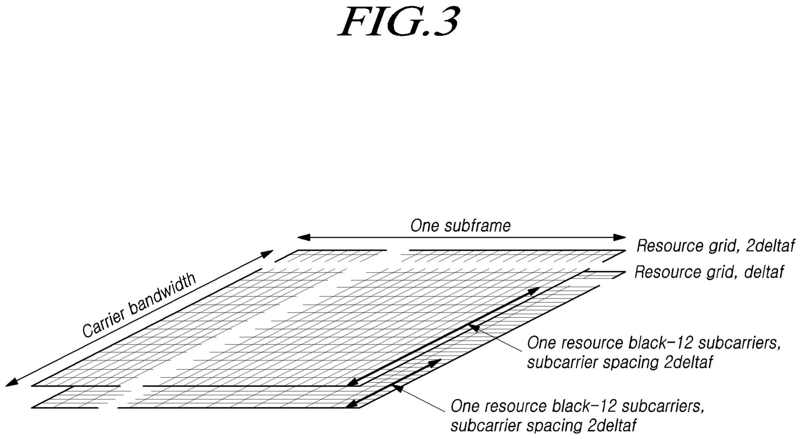

FIG. 3 illustrates resource grids supported by a radio access technology in accordance with embodiments of the present disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

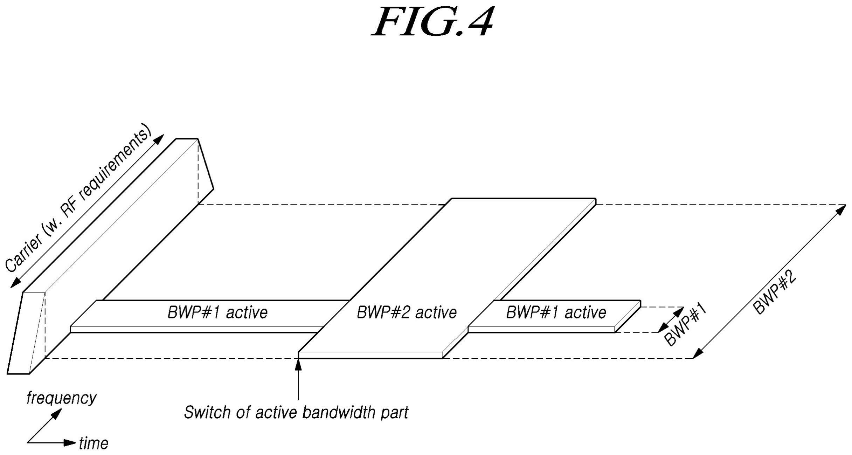

FIG. 4 illustrates bandwidth parts supported by a radio access technology in accordance with embodiments of the present disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

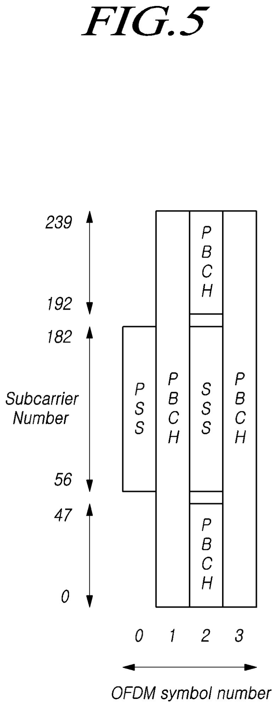

FIG. 5 illustrates an example of a synchronization signal block in a radio access technology in accordance with embodiments of the present disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

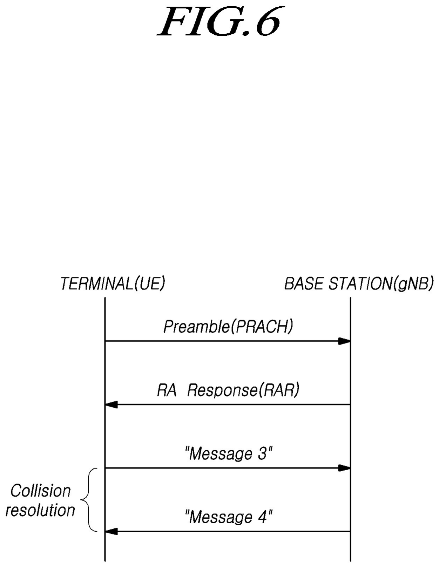

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

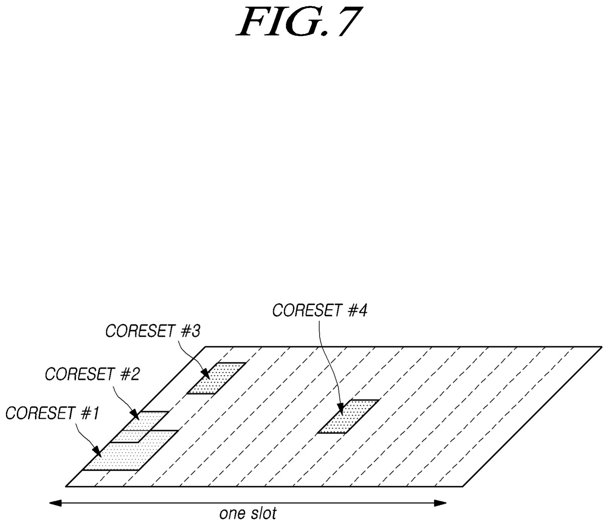

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

### Wider bandwidth operations

The typical LTE system supports scalable bandwidth operations for any LTE CC (component carrier). That is, according to a frequency deployment scenario, an LTE provider may configure a bandwidth of a minimum of 1.4 MHz to a maximum of 20 MHz in configuring a single LTE CC, and a normal LTE UE supports a transmission/reception capability of a bandwidth of 20 MHz for a single LTE CC.

However, the NR is designed to support the UE of NR having different transmission/reception bandwidth capabilities over a single wideband NR CC. Accordingly, it is required to configure one or more bandwidth parts (BWPs) including subdivided bandwidths for an NR CC, thereby supporting a flexible and wider bandwidth operation through configuration and activation of different bandwidth parts for respective UEs.

Specifically, one or more bandwidth parts may be configured through a single serving cell configured for a UE in NR, and the UE is defined to activate one downlink (DL) bandwidth part and one uplink (UL) bandwidth part to use the same for uplink/downlink data transmission/reception in the corresponding serving cell. In addition, in the case where a plurality of serving cells is configured for the UE (i.e., the UE to which CA is applied), the UE is also defined to activate one downlink bandwidth part and/or one uplink bandwidth part in each serving cell to use the same for uplink/downlink data transmission/reception by utilizing radio resources of the corresponding serving cell.

Specifically, an initial bandwidth part for an initial access procedure of a UE may be defined in a serving cell; one or more UE-specific bandwidth parts may be configured for each UE through dedicated RRC signaling, and a default bandwidth part for a fallback operation may be defined for each UE.

It is possible to define simultaneously activating and using a plurality of downlink and/or uplink bandwidth parts according to the capability of the UE and the configuration of the bandwidth parts in a serving cell. However, NR rel-15 defined activating and using only one downlink (DL) bandwidth part and one uplink (UL) bandwidth part at a time.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

Hereinafter, a method of performing uplink transmission and downlink reception by a UE in full-duplex communication is described in detail with reference to the related drawings.

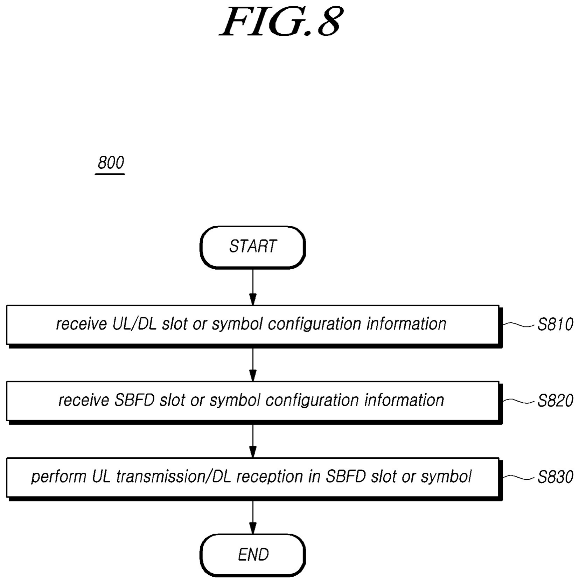

FIG. 8 is a flowchart illustrating a method (800) of performing uplink transmission and downlink reception by a UE according to an embodiment.

Referring to FIG. 8, the UE may receive configuration information for a downlink slot and downlink symbol, and an uplink slot and uplink symbol (S810).

The time division duplex (TDD) divides and uses time-domain radio resources into a downlink slot and an uplink slot, and the UE may receive TDD configuration information from the base station to determine the format of the symbol. In this case, the TDD configuration information may include slot format configuration information (e.g., configuration information about the format of the slot) and symbol format configuration information (e.g., configuration information for determining the format of the symbol) within the slot, and the corresponding information may be received through higher layer signaling or L1 (physical layer) signaling.

The UE may receive TDD configuration information for uplink-downlink slot configuration from the base station. In this case, the corresponding slot configuration may be configured on a per-cell basis through higher layer signaling (e.g., cell-specific RRC signaling). In other words, a downlink symbol, an uplink symbol, and a flexible symbol with an undetermined transmission direction of a predetermined period may be configured through an RRC message for configuring a corresponding UL-DL slot.

Further, the UE may receive UE-specific RRC signaling in which flexible symbols among symbols configured through cell-specific RRC signaling are reallocated to uplink symbols, downlink symbols, or flexible symbols for each UE.

Alternatively, the UE may receive an indication of a dynamic slot format through a UE-group common PDCCH. According to an embodiment, the UE may dynamically receive the slot format through DCI format 2_0.

Referring back to FIG. 8, the UE may receive configuration information for a subband and configuration information for a subband full duplex (SBFD) slot or an SBFD symbol for full-duplex communication (S820).

Full-duplex communication is a technique in which the base station simultaneously performs downlink transmission and uplink reception in the same radio resource. The UE side may simultaneously perform downlink reception and uplink transmission. When the base station supports full-duplex communication based on non-overlapping subband, a specific frequency resource in the same symbol in the TDD carrier may be used for downlink transmission, and another frequency resource may be used for uplink reception. In other words, as described above, a subband may be configured to support a transmission direction other than the transmission direction of uplink, downlink, or flexible set for the UE.

In other words, for the TDD carrier, some frequency resources may be utilized for uplink transmission of the UE in any downlink slot or downlink symbol, or may be utilized like a flexible symbol for downlink/uplink transition. Alternatively, some frequency resources in any uplink slot or uplink symbol may be configured to be utilized for downlink transmission of the base station. For example, when an uplink subband is configured in any downlink slot, the uplink subband may be set in the center or at the edge of the corresponding frequency band. In this case, a guard band may be configured between the uplink subband and the downlink subband in the corresponding slot. The UE may receive subband configuration information for full-duplex communication from the base station.

As such, a downlink slot or symbol including an uplink subband or an uplink slot or symbol including a downlink subband is referred to as a subband full duplex (SBFD) slot or SBFD symbol in the disclosure. However, the term 'SBFD' is for convenience of description and the scope of the disclosure is not limited thereby, and other terminology may be used as needed.

The UE may receive information about the downlink slot or symbol including the uplink subband or the uplink slot or symbol including the downlink subband, (e.g., time-domain configuration information for an SBFD slot or SBFD symbol). In other words, the UE may receive information about the slot or symbol in which an uplink subband is configured among downlink slots or symbols allocated to the UE. Alternatively, the UE may receive information about the slot or symbol in which a downlink subband is configured among uplink slots or symbols allocated to the UE.

Referring again to FIG. 8, the UE may perform uplink transmission or downlink reception based on transmission direction link configuration information in the SBFD slot or SBFD symbol (S830).

In the SBFD slot or SBFD symbol, the UE may perform uplink transmission through the uplink subband or perform downlink reception through the downlink subband. Accordingly, the UE may obtain transmission direction link configuration information about which operation, out of uplink transmission or downlink reception, to perform in the SBFD slot or SBFD symbol.

According to an embodiment, the transmission direction link configuration information in the SBFD slot or SBFD symbol may be configured through cell-specific higher layer signaling or UE-specific higher layer signaling. As described above, in addition to RRC signaling configuring uplink slots and downlink slots in an existing TDD system, the transmission direction link configuration information for configuring uplink or downlink for SBFD slots or symbols may be further configured. In this case, the UE may receive the transmission direction link configuration information through cell-specific RRC signaling or UE-specific RRC signaling.

Specifically, the UE may receive, from the base station, the SBFD slot configuration message set as SBFD-DL, SBFD-UL, or SBFD-flexible for each of all the symbols included in the SBFD slot or SBFD symbols. Here, SBFD-DL means that downlink reception is configured to be performed in the SBFD slot or SBFD symbol. Similarly, SBFD-UL means that uplink transmission is configured to be performed in the SBFD slot or SBFD symbol, and SBFD-flexible means that both downlink reception and uplink transmission are configured to be possible in the SBFD slot or SBFD symbol.

Transmission direction link configuration information may be received through separate cell-specific RRC signaling or UE-specific RRC signaling. Alternatively, the transmission direction link configuration information may be included in an RRC message and received through this RRC message. Alternatively, an information area for configuring SBFD-UL, SBFD-DL, or SBFD-flexible for the SBFD slot or SBFD symbol may be further included in the above-described RRC message for configuring the uplink-downlink slot.

In other words, when the UE receives transmission direction link configuration information set as SBFD-DL within the SBFD slot or SBFD symbol from the base station, the UE may perform a downlink reception operation through the downlink subband in the corresponding SBFD slot or SBFD symbol. In this case, the UE may additionally perform a downlink reception operation through a guard band or the uplink subband in the corresponding SBFD slot or symbol.

Similarly, when the UE receives the transmission direction link configuration information set as SBFD-UL within the SBFD slot or SBFD symbol from the base station, the UE may perform an uplink transmission operation through the uplink subband in the corresponding SBFD slot or SBFD symbol. Alternatively, when the UE receives the transmission direction link configuration information set to SBFD-flexible by the base station in the SBFD slot or SBFD symbol, the UE may operate in the same manner as in existing flexible symbols in the corresponding SBFD slot or SBFD symbol. In other words, the UE may utilize the corresponding SBFD-flexible symbol as a guard symbol for transition between downlink reception and uplink transmission or utilize it for uplink transmission or downlink reception according to L1 control signaling of the base station.

According to another embodiment, the transmission direction link configuration information within the SBFD slot or SBFD symbol may be indicated through physical layer (L1) control signaling for an SBFD symbol-only slot format indication (e.g., indication of a slot format including only of SBFD symbols). The UE may dynamically receive an indication of the SBFD slot format for the SBFD slot or SBFD symbol through L1 control signaling from the base station. In other words, the base station may transmit downlink control information (DCI) to indicate SBFD-DL, SBFD-UL, or SBFD-flexible for the SBFD slot or SBFD symbol to the UE. Alternatively, the SBFD slot format indication may be defined to be performed for slots composed of SBFD-flexible symbols not set as SBFD-DL or SBFD-UL through higher layer signaling by the base station among SBFD symbols. In this case, a separate DCI format for indicating the SBFD slot format may be configured.

This DCI format may include SBFD-DL, SBFD-UL, or SBFD-flexible indication information, in slot or symbol units, for SBFD slots or symbols in the period based on the configuration period of the uplink subband or the downlink subband. For example, the DCI format for indicating the SBFD slot format may be transmitted by the base station on a subband configuration period basis and monitored by the UE. In this case, the DCI format may indicate SBFD-DL, SBFD-UL, or SBFD-flexible for all the symbols constituting the corresponding SBFD slot or SBFD symbols for all the SBFD slots in the corresponding period.

Alternatively, regardless of the configuration period of the subband for SBFD operation, a monitoring period for a separate SBFD slot format indication DCI may be set by the base station. Even in this case, SBFD-DL, SBFD-UL, and SBFD-flexible indication information may be transmitted for all the SBFD slots or SBFD symbols in the separately set period.

To indicate the SBFD slot format through DCI, a SBFD slot format table including SBFD-DL, SBFD-UL, or SBFD-flexible configuration information of 14 symbol units constituting one SBFD slot may be configured. In this case, in the table, SBFD-DL, SBFD-UL, or SBFD-flexible information may be configured for each index, and the index in the table may be indicated through the corresponding DCI format.

Alternatively, through a DCI format for indicating the SBFD slot format, SBFD-DL, SBFD-UL, or SBFD-flexible indication information may be directly transmitted in symbol units in the SBFD slot.

Alternatively, without defining a separate DCI format for SBFD slot format indication, slot format indication information in the SBFD slot may be transmitted through the existing DCI format 2_0 for slot format indication. In other words, if the base station indicates the slot format in the SBFD slot through DCI format 2_0 in the same manner as typical, the UE may determine whether to perform downlink reception or uplink transmission in the corresponding SBFD slot. In other words, for any SBFD slot, symbols indicated as DL, UL, and flexible by DCI format 2_0 may be interpreted as SBFD-DL, SBFD-UL, and SBFD-flexible, respectively.

When the UE receives, from the base station, an indication of transmission direction link configuration information set to SBFD-DL in the SBFD slot or SBFD symbol, the UE may perform downlink reception operation through the downlink subband in the corresponding SBFD slot or SBFD symbol. In this case, the UE may additionally perform a downlink reception operation through a guard band or the uplink subband in the corresponding SBFD slot or symbol.

Similarly, when the UE receives, from the base station, an indication of transmission direction link configuration information set to SBFD-UL in the SBFD slot or SBFD symbol, the UE may perform uplink transmission operation through the uplink subband in the corresponding SBFD slot or SBFD symbol. Alternatively, when the UE receives the transmission direction link configuration information set to SBFD-flexible by the base station in the SBFD slot or SBFD symbol, the UE may operate in the same manner as in existing flexible symbols in the corresponding SBFD slot or SBFD symbol.

According to another embodiment, the transmission direction link configuration information in the SBFD slot or SBFD symbol may be determined based on scheduling control information including downlink assignment control information or uplink grant control information.

In this case, according to the PDSCH/PUSCH scheduling control information of the base station or reference signal transmission/reception configuration information such as CSI-RS, SRS, etc., the UE may determine to perform downlink reception or uplink transmission operation in the SBFD slot or SBFD symbol. In other words, for all the SBFD slots or SBFD symbols, the UE may define flexible symbol operation as a baseline operation and perform downlink reception or uplink transmission according to the PDSCH/PUSCH scheduling control information or reference signal transmission/reception configuration information of the base station.

According to an embodiment, different transmission directions in the SBFD slot or SBFD symbol may be set according to each of the higher layer signaling and physical layer (L1) scheduling control information. In other words, in the event of a conflict between transmission direction link configuration information set according to higher layer signaling and transmission direction link configuration information indicated according to physical layer (L1) control signaling for at least one SBFD symbol, the UE may perform uplink transmission or downlink reception according to the transmission direction link configuration information indicated by the physical layer (L1) control signaling.

In other words, the UE may be configured to perform uplink transmission or downlink reception based on the priority determined according to the signaling method. For example, L1 control signaling transmitted through PDCCH may be set to have priority over RRC signaling set through PDSCH. Alternatively, on the contrary, RRC signaling set through PDSCH may be set to have priority over L1 control signaling transmitted through PDCCH.

Alternatively, the UE may be configured to perform uplink transmission or downlink reception based on the priority determined by the timing of configuration or indication. For example, the most recently made configuration or indication may be set to have priority.

According to the embodiments described above, uplink and downlink transmission/reception may be performed efficiently within slots or symbols where full-duplex communication is applied.

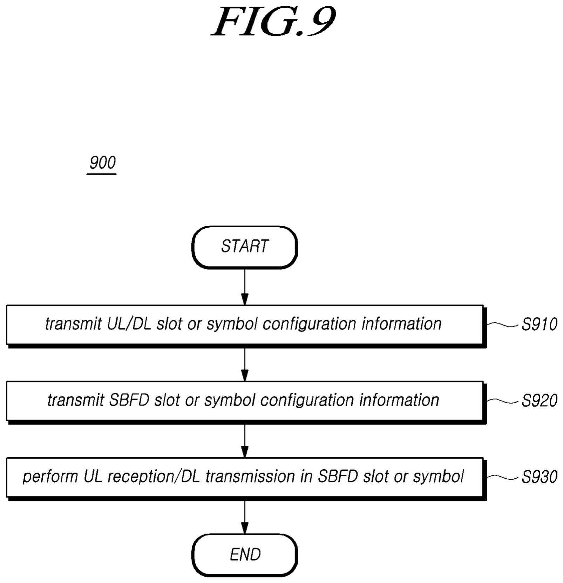

FIG. 9 illustrates a method (900) of a base station for performing uplink reception and downlink transmission according to an embodiment. The description made in connection with FIG. 8 may be omitted to avoid repetition and, in that case, the omitted content may be applied in substantially the same manner to the base station as long as it does not conflict the technical spirit of the invention.

Referring to FIG. 9, the base station may transmit configuration information for a downlink slot and a downlink symbol, and an uplink slot and an uplink symbol (S910).

The base station may transmit TDD configuration information for uplink-downlink slot configuration to the UE. In this case, the corresponding slot configuration may be configured on a per-cell basis through higher layer signaling (e.g., cell-specific RRC signaling). In other words, a downlink symbol, an uplink symbol, and a flexible symbol with an undetermined transmission direction of a predetermined period may be configured through an RRC message for configuring a corresponding UL-DL slot.

Further, the base station may transmit UE-specific RRC signaling in which flexible symbols among symbols configured through cell-specific RRC signaling are reallocated to uplink symbols, downlink symbols, or flexible symbols for each UE.

Alternatively, the base station may indicate a dynamic slot format through a UE-group common PDCCH to the UE. According to an embodiment, the base station may dynamically indicate the slot format through DCI format 2_0.

Referring back to FIG. 9, the base station may transmit configuration information for a subband and configuration information about a subband full duplex (SBFD) slot or SBFD symbol for the full-duplex communication (S920).

For the TDD carrier, some frequency resources may be utilized for uplink transmission of the UE in any downlink slot or downlink symbol. Or some frequency resources may be utilized like a flexible symbol for downlink/uplink transition. Alternatively, some frequency resources in any uplink slot or uplink symbol may be configured to be utilized for downlink transmission of the base station. For example, when an uplink subband is configured in any downlink slot, the uplink subband may be set at a center or at the edge of the corresponding frequency band. In this case, a guard band may be configured between the uplink subband and the downlink subband in the corresponding slot. The base station may transmit configuration information for the subband for full-duplex communication to the UE.

The base station may transmit information for the downlink slot or symbol including the uplink subband or the uplink slot or symbol including the downlink subband (e.g., configuration information for the SBFD slot or SBFD symbol which is information about time resources). In other words, the base station may transmit information for the slot or symbol in which an uplink subband is configured among downlink slots or symbols allocated to the UE. Alternatively, the base station may transmit information for the slot or symbol in which a downlink subband is configured among uplink slots or symbols allocated to the UE.

Referring again to FIG. 9, the base station may perform uplink reception or downlink transmission based on transmission direction link configuration information in the SBFD slot or SBFD symbol (S830).

In the SBFD slot or SBFD symbol, the base station may perform uplink reception through the uplink subband or perform downlink transmission through the downlink subband. Accordingly, the UE may obtain transmission direction link configuration information about which operation, out of uplink transmission or downlink reception, to perform in the SBFD slot or SBFD symbol.

According to an embodiment, the transmission direction link configuration information in the SBFD slot or SBFD symbol may be configured through cell-specific higher layer signaling or UE-specific higher layer signaling. As described above, in addition to RRC signaling configuring uplink slots and downlink slots in an existing TDD system, the transmission direction link configuration information for configuring uplink or downlink for SBFD slots or symbols may be further configured. In this case, the base station may transmit the transmission direction link configuration information through cell-specific RRC signaling or UE-specific RRC signaling.

Specifically, the base station may transmit, to the UE, the SBFD slot configuration message set as SBFD-DL, SBFD-UL, or SBFD-flexible for each of all the symbols included in the SBFD slot or SBFD symbols.

Transmission direction link configuration information may be transmitted through separate cell-specific RRC signaling or UE-specific RRC signaling. Alternatively, the transmission direction link configuration information may be included and transmitted in an RRC message including the above-described configuration information for subbands for full-duplex communication. Alternatively, an information area for configuring SBFD-UL, SBFD-DL, or SBFD-flexible for the SBFD slot or SBFD symbol may be further included in the above-described RRC message for configuring the uplink-downlink slot.

In other words, when transmission direction link configuration information set as SBFD-DL is transmitted in the SBFD slot or SBFD symbol, the base station may perform a downlink transmission operation through the downlink subband in the corresponding SBFD slot or SBFD symbol. In this case, the base station may additionally perform a downlink transmission operation through a guard band or the uplink subband in the corresponding SBFD slot or symbol.

Likewise, when transmission direction link configuration information set as SBFD-UL is transmitted in the SBFD slot or SBFD symbol, the base station may perform an uplink reception operation through the uplink subband in the corresponding SBFD slot or SBFD symbol. Alternatively, when the transmission direction link configuration information set to SBFD-flexible is transmitted in the SBFD slot or SBFD symbol, the base station may operate in the same manner as in existing flexible symbols in the corresponding SBFD slot or SBFD symbol. In other words, the UE may utilize the corresponding SBFD-flexible symbol as a guard symbol for transition between downlink reception and uplink transmission, or utilize it for uplink transmission or downlink reception according to L1 control signaling of the base station.

According to another embodiment, the transmission direction link configuration information in the SBFD slot or SBFD symbol may be indicated through physical layer (L1) control signaling for indication of a slot format including only of SBFD symbols. The base station may dynamically indicate, to the UE, the SBFD slot format for the SBFD slot or SBFD symbol through L1 control signaling from the base station. In other words, the base station may transmit downlink control information (DCI) to indicate SBFD-DL, SBFD-UL, or SBFD-flexible for the SBFD slot or SBFD symbol to the UE. Alternatively, the SBFD slot format indication may be defined to be performed for slots composed of SBFD-flexible symbols not set as SBFD-DL or SBFD-UL through higher layer signaling by the base station among SBFD symbols. In this case, a separate DCI format for indicating the SBFD slot format may be configured.

This DCI format may include SBFD-DL, SBFD-UL, or SBFD-flexible indication information, in slot or symbol units, for SBFD slots or symbols in the period based on the configuration period of the uplink subband or the downlink subband. For example, the DCI format for indicating the SBFD slot format may be transmitted by the base station on a subband configuration period basis and monitored by the UE. In this case, the DCI format may indicate SBFD-DL, SBFD-UL, or SBFD-flexible for all the symbols constituting the corresponding SBFD slot or SBFD symbols for all the SBFD slots in the corresponding period.

Alternatively, regardless of the configuration period of the subband for SBFD operation, a monitoring period for a separate SBFD slot format indication DCI may be set by the base station. Even in this case, SBFD-DL, SBFD-UL, and SBFD-flexible indication information may be transmitted for all the SBFD slots or SBFD symbols in the separately set period.

To indicate the SBFD slot format through DCI, a SBFD slot format table including SBFD-DL, SBFD-UL, or SBFD-flexible configuration information of 14 symbol units constituting one SBFD slot may be configured. In this case, in the table, SBFD-DL, SBFD-UL, or SBFD-flexible information may be configured for each index, and the index in the table may be indicated through the corresponding DCI format.

Alternatively, through a DCI format for indicating the SBFD slot format, SBFD-DL, SBFD-UL, or SBFD-flexible indication information may be directly transmitted in symbol units in the SBFD slot.

Alternatively, without defining a separate DCI format for SBFD slot format indication, slot format indication information in the SBFD slot may be transmitted through the existing DCI format 2_0 for slot format indication. In other words, if the base station indicates the slot format in the SBFD slot through DCI format 2_0 in the same manner as typical, the UE may determine whether to perform downlink reception or uplink transmission in the corresponding SBFD slot. In other words, for any SBFD slot, symbols indicated as DL, UL, and flexible by DCI format 2_0 may be interpreted as SBFD-DL, SBFD-UL, and SBFD-flexible, respectively.

When the base station indicates transmission direction link configuration information set as SBFD-DL in the SBFD slot or SBFD symbol, the base station may perform a downlink transmission operation through the downlink subband in the corresponding SBFD slot or SBFD symbol. In this case, the base station may additionally perform a downlink transmission operation through a guard band or the uplink subband in the corresponding SBFD slot or symbol.

Likewise, when the base station indicates transmission direction link configuration information set as SBFD-UL in the SBFD slot or SBFD symbol, the base station may perform an uplink reception operation through the uplink subband in the corresponding SBFD slot or SBFD symbol. Alternatively, when the base station transmits the transmission direction link configuration information set to SBFD-flexible in the SBFD slot or SBFD symbol, the base station may operate in the same manner as in existing flexible symbols in the corresponding SBFD slot or SBFD symbol.

According to another embodiment, the transmission direction link configuration information in the SBFD slot or SBFD symbol may be determined based on scheduling control information including downlink assignment control information or uplink grant control information.

In this case, according to the PDSCH/PUSCH scheduling control information of the base station or reference signal transmission/reception configuration information such as CSI-RS, SRS, etc., the UE may determine downlink reception or uplink transmission operation in the SBFD slot or SBFD symbol. In other words, for all the SBFD slots or SBFD symbols, the UE may define flexible symbol operation as a baseline operation and perform downlink reception or uplink transmission according to the PDSCH/PUSCH scheduling control information or reference signal transmission/reception configuration information of the base station.

According to an embodiment, different transmission directions in the SBFD slot or SBFD symbol may be set according to each of higher layer signaling and physical layer scheduling control information. In other words, in the event of a conflict between transmission direction link configuration information set according to higher layer signaling and transmission direction link configuration information indicated according to physical layer (L1) control signaling for at least one SBFD symbol, the base station may perform uplink reception or downlink transmission according to the transmission direction link configuration information indicated by the physical layer (L1) control signaling.

In other words, the base station may be configured to perform uplink reception or downlink transmission based on the priority determined according to the signaling method. For example, L1 control signaling transmitted through PDCCH may be set to have priority over RRC signaling set through PDSCH. Alternatively, on the contrary, RRC signaling set through PDSCH may be set to have priority over L1 control signaling transmitted through PDCCH.

Alternatively, the base station may be configured to perform uplink reception or downlink transmission based on the priority determined according to the timing of the configuration or indication. For example, the most recently made configuration or indication may be set to have priority.

According to the embodiments described above, uplink and downlink transmission/reception may be performed efficiently in slots or symbols where full-duplex communication is applied.

Hereinafter, more embodiments related to the method for transmitting/receiving a downlink control channel in full-duplex communication are described in detail with reference to related drawings.

The disclosure proposes a method for configuring downlink control channel transmission/reception resources for a UE in any base station/cell where an uplink (UL) subband or downlink (DL) subband configuration has been made to support full-duplex communication in a wireless mobile communication system.

Time division duplex (TDD) is a duplexing method widely used in commercial new radio (NR), i.e., 5G mobile communication systems. In TDD, time-domain radio resources are divided into downlink slots and uplink slots, and downlink slots are usually distributed at a higher ratio than uplink slots according to the distribution ratio of uplink traffic and downlink traffic. However, this limitation of the uplink slot negatively affects coverage and latency. Full-duplex communication may be applied as a technology for addressing such issues.

Specifically, full-duplex communication is a technique in which a gNB (e.g., a base station) simultaneously performs DL transmission and UL reception in the same radio resource. The UE side may simultaneously perform DL reception and UL transmission as well. In other words, both the base station and the UE may support full duplex. However, unlike the base station, for which self-interference cancellation is structurally easy, in the UE, DL reception performance is prone to be affected by self-interference of UL transmission signals. Therefore, it is generally considered that the base station operates in full-duplex communication and the UE operates in half-duplex communication. Further, non-overlapping subband full duplex method may be considered, where the base station reduces self-interference by using separate frequency resources for simultaneous DL transmission and UL reception instead of using the same resource.

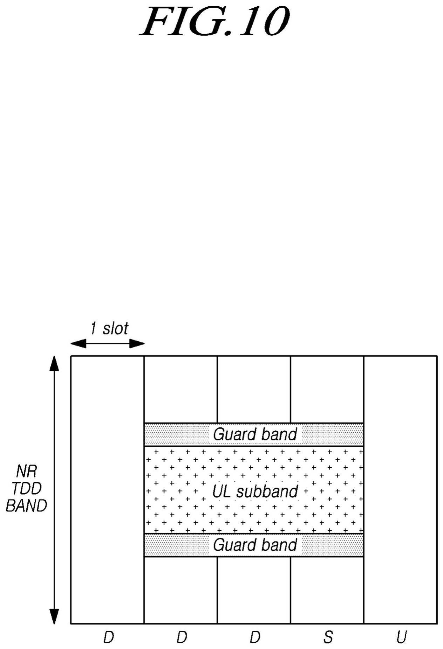

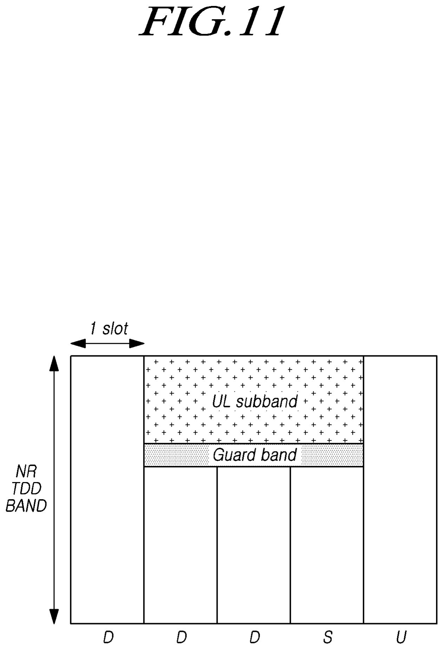

In other words, FIGS. 10 and 11 illustrate an example in which DL slots and UL slots are configured in a ratio of 4:1 in any NR frequency band. However, some symbols of the last DL slot may be a special slot including a flexible symbol for DL/UL transition. As described above, when a time division duplex (TDD) configuration is implemented, an uplink subband for supporting UL transmission of the UE may be configured in some (or all) DL slots of the corresponding DL slots. When the UL subband is set in any DL slot, the UL subband may be configured in the center of the corresponding frequency band as shown in FIG. 10. Or the UL subband may be configured at the edge of the corresponding frequency band as shown in FIG. 11. In this case, a guard band may be configured between the UL subband and the downlink subband (DL subband) in the corresponding slot.

The disclosure proposes a method for configuring a BWP when any base station/network supports non-overlapping subband full duplex and accordingly transmitting/receiving radio channels (e.g., PDCCH/PDSCH and PUSCH/PUCCH) and uplink/downlink radio signals (DM-RS, CSI-RS, SRS, and PSS/SSS) of the base station and the UE. However, the description of the disclosure may be substantially identically applied to other various full-duplex application scenarios. For example, the full duplex application scenario may include a full duplex operation in an unpaired spectrum and a full duplex operation in a downlink (DL) frequency band or an uplink (UL) frequency band of a paired spectrum. Further, as described above, the description of the disclosure may be substantially identically applied to a scenario in which non-overlapping subband full duplex or pure full duplex (i.e., DL transmission and UL reception simultaneously in the same frequency resource) is supported only on the base station side, and a half duplex operation is performed in the UE. Further, the description of the disclosure may be substantially identically applied even when not only the base station but also the UE supports non-overlapping subband full duplex or pure full duplex.

The uplink-downlink (UL-DL) slot configuration defined in NR is defined to be performed in units of cells through cell-specific RRC signaling. In other words, patterns of DL symbols, UL symbols, and flexible symbols of a predetermined period are configured through the RRC message 'tdd-UL-DL-ConfigurationCommon' for the corresponding UL-DL slot configuration. Additionally, through 'tdd-UL-DL-ConfigurationDedicated' which is UE-specific RRC signaling, only flexible symbols configured through the 'tdd-UL-DL-ConfigurationCommon' may be reallocated as UL symbols, DL symbols, or flexible symbols for each UE. Or, a method for indicating a dynamic slot format through a UE-group common PDCCH has also been defined. To that end, NR also supports a slot format indication method in a dynamic form through DCI format 2_0.

According to the above-described slot configuration method, any one symbol may be configured or indicated as one of DL, UL, or Flexible. FIG. 10 illustrates an example in which any slot format is set as DDDSU through the typical slot configuration. D is a down link slot, which means that all OFDM symbols constituting the corresponding slot are set as DL. U is an uplink slot, which means that all OFDM symbols constituting the corresponding slot are set as UL. S is a special slot, which means a slot including a flexible symbol for DL/UL transition. In general, the special slot may be composed of 12 DL symbols and 2 flexible symbols out of a total of 14 symbols for a normal CP. Alternatively, it may be composed of 10 DL symbols, 2 flexible symbols, and 2 UL symbols. In other words, within any one TDD carrier, one symbol was set or indicated as only one of DL, UL, or flexible.

However, when the UL subband is configured in any DL slot as shown in FIGS. 10 and 11, DL transmission or UL reception may occur simultaneously for each frequency resource in the corresponding symbol. As described above, a DL slot or symbol including a UL subband or a UL slot or symbol including a DL subband is referred to as an SBFD slot or an SBFD symbol in the disclosure.

Specifically, as illustrated in FIGS. 10 and 11, when a UL subband is configured in any DL slot, from the base station perspective, radio resources of the frequency band corresponding to the UL subband are allocated for UL transmission by UEs. Further, in FIGS. 10 and 11, radio resources of the frequency band corresponding to the DL subband, which is the remaining frequency band except for the UL subband and guard band, are allocated for DL transmission to UEs. On the other hand, for the UE in the cell, it is necessary to define whether to receive the DL signal of the base station through the DL subband or to perform UL transmission to the base station through the UL subband in the corresponding SBFD symbol.

The disclosure proposes a method for DL/UL operation for any UE in an SBFD symbol. Specifically, the disclosure proposes a method for defining which operation to perform between UL transmission using a UL subband and DL reception using a DL subband in any UE in the SBFD slot or symbol. In other words, the disclosure proposes a method for SBFD slot configuration for any UE.

### Embodiment 1: semi-static configuration method

When any slot or symbol is configured as the SBFD slot or symbol including UL subband, (guard band, if necessary), and DL subband, in this method according to embodiment 1, the base station transmits higher layer signaling to set the link direction (e.g., DL, UL, or flexible, etc.) of the UE in the corresponding SBFD slot or symbol for each UE. In other words, in addition to the existing RRC message *'tdd-UL-DL-ConfigurationCommon'* for UL-DL slot configuration or UE-specific RRC signaling *'tdd-UL-DL-ConfigurationDedicated,* this method according to embodiment 1 additionally configures SBFD slot or symbol target UL-DL configuration information and transmit, to any UE, through UE-specific RRC signaling, UE-group common RRC signaling, or cell-specific RRC signaling. For example, an RRC message such as 'SBFD-UL-DL-configurationcommon' or 'SBFD-UL-DL-configurationdedicated' (this is an example, and the present invention is not limited by the name of the RRC message) may be additionally defined.

Specifically, the base station may set SBFD-DL, SBFD-UL, or SBFD-flexible for each of all the OFDM symbols or SBFD symbols included in any SBFD slot through the corresponding SBFD slot configuration message for any UE and transmit it to the UE. Based on this, when any UE receives SBFD-DL configuration information in any SBFD slot or symbol from the base station, the UE may perform, expect, or define as a baseline the DL reception operation through the DL subband in the corresponding SBFD slot or symbol. Alternatively, the UE may additionally perform DL reception operation through the guard band or UL subband.

On the other hand, when any UE receives SBFD-UL configuration information in any SBFD slot or symbol from the base station, the UE may perform, expect, or define as a baseline operation the UL transmission operation through the UL subband in the corresponding SBFD slot or symbol. If any UE receives SBFD-flexible configuration information in any SBFD slot or symbol from the base station, the UE may follow the operation of the existing flexible symbol in the corresponding SBFD slot or symbol.

However, the SBFD-slot configuration information may be transmitted through a separate cell-specific or UE-specific RRC message such as 'SBFD-UL-DL-configurationcommon' or 'SBFD-UL-DL-configurationdedicated', or it may be defined to include the corresponding SBFD-slot configuration information along with UL or DL subband configuration information in the RRC message for UL or DL subband configuration for SBFD operation. Alternatively, it may be defined to include an information area for SBFD-UL, SBFD-DL, or SBFD-flexible configuration for the corresponding SBFD slot or symbol in the existing UL-DL-configuration RRC message.

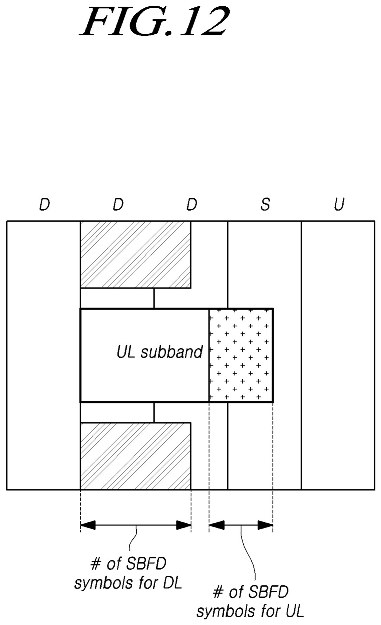

Hereinafter, an example of DL/UL or flexible configuration in an SBFD symbol through RRC signaling for any of the above-mentioned any UE is presented. UL transmission, DL reception, or flexible configuration in an SBFD symbol may be set for a continuous SBFD symbol pattern in which UL subband or DL subband or additionally flexible subband configuration is made for SBFD operation. For example, as illustrated in FIGS. 10 and 11, when UL subband configuration is made in the flexible symbol and the DL symbol of a special slot where continuous DL slots and DL symbols and flexible symbols and UL symbols are mixed, DL, UL, and flexible are set for all the continuous SBFD symbols. For example, as illustrated in FIG. 12, the number of DL reception symbols from the first SBFD symbol and the number of UL transmission symbols from the last SBFD symbol are set for the entire SBFD symbols, and the remaining SBFD symbols may be set to operate as flexible symbols.

### Embodiment 2: dynamic indication method

In this method according to embodiment 2, the base station dynamically indicates the SBFD slot format for any SBFD slot or symbol through L1 control signaling. In other words, tin this method according to embodiment 2, the base station transmits downlink control information (DCI) to indicate SBFD-DL, SBFD-UL, or SBFD-flexible for any SBFD slot or symbol for any UE. As an example thereof, a separate DCI format for indicating the corresponding SBFD slot format may be defined.

In this method according to embodiment 2, the DCI format for indicating the SBFD slot format includes SBFD-DL, SBFD-UL, or SBFD-flexible indication information, in slot or symbol units, for SBFD slot or symbols in the period based on the UL subband or DL subband configuration period. For example, in this method, the DCI format for indicating the SBFD slot format is transmitted by the base station in UL subband or DL subband configuration period units and monitored by the UE, and SBFD-DL, SBFD-UL, or SBFD-flexible is indicated for all the symbols or SBFD symbols constituting the SBFD slot for all the SBFD slots in the corresponding period. For example, when the UL subband is configured in three slots among five slots so that the three slots are set as the SBFD slots, the base station may transmit the DCI format for indicating the SBFD slot format in the five-slot period (or in the period of a multiple of five slots) and the UE may monitor the same. In this case, in this method according to embodiment 2, the SBFD slot format indication DCI includes SBFD-DL, SBFD-UL, or SBFD-flexible configuration indication information for all symbols or SBFD symbols constituting the three SBFD slots (when the SBFD slot format DCI is transmitted in the five-slot period) in the corresponding period. Alternatively, it may be configured to apply the SBFD slot format indication DCI only to the SBFD slots composed only of the SBFD-flexible symbols, not set as SBFD-DL or SBFD-UL symbols, by higher layer signaling according to embodiment 1 described above, among the SBFD slots. Alternatively, in this method according to embodiment 2, regardless of the UL subband or DL subband configuration period for the corresponding SBFD operation, the base station sets a separate monitoring period for the SBFD slot format indication DCI and transmits the SBFD-DL, SBFD-UL, or SBFD-flexible indication information for all SBFD slots or symbols in the corresponding period based thereon.

As such, in this method according to embodiment 2, as the SBFD slot format indication method through DCI, an SBFD slot format table including SBFD-DL, SBFD-UL, or SBFD-flexible configuration information in units of 14 symbols constituting one SBFD slot is configured to indicate the index in the table through the DCI format for SBFD slot format indication or to directly transmit the SBFD-DL, SBFD-UL, or SBFD-flexible indication information in symbol units in the corresponding SBFD slot through the DCI format for SBFD slot format indication. However, this method according to embodiment 2 may define that when a table for SBFD slot format indication is configured, a default table therefor is defined, or the base station configures the SBFD-DL, SBFD-UL, or SBFD-flexible indication information for each index constituting the table through RRC signaling.

Alternatively, this method according to embodiment 2 may transmit/receive slot format indication information in the SBFD slot through existing DCI format 2_0 for slot format indication without defining a separate DCI format for SBFD slot format indication. In other words, this method according to embodiment 2 allows that the base station indicates the slot format in the SBFD slot through DCI format 2_0 in the same manner as typical, and the UE determines whether to perform DL reception or UL transmission in the corresponding SBFD slot based thereon. In other words, it may be defined that for any SBFD slot, symbols indicated as DL, UL, and flexible by DCI format 2_0 are interpreted as SBFD-DL, SBFD-UL, and SBFD-flexible, respectively.

The operations of the base station and the UE in the SBFD-DL, SBFD-UL, or SBFD-flexible indicated by embodiment 2 above are identical to those of embodiment 1. In other words, when any UE receives SBFD-DL indication information in any SBFD slot or symbol from the base station, the UE may perform, expect, or define as a baseline the DL reception operation through the DL subband in the corresponding SBFD slot or symbol. (Alternatively, it may additionally perform DL reception operation through the guard band or UL subband.) On the other hand, when any UE receives SBFD-UL indication information in any SBFD slot or symbol from the base station, the UE may perform, expect, or define as a baseline operation the UL transmission operation through the UL subband in the corresponding SBFD slot or symbol. If any UE receives SBFD-flexible indication information in any SBFD slot or symbol from the base station, the UE may follow the operation of the existing flexible symbol in the corresponding SBFD slot or symbol. In other words, for SBFD-flexible, both DL reception through DL subband (or additionally guard band or UL subband) and UL transmission through UL subband are possible according to additional settings or indication of the base station.

### Embodiment 3: implicit indication

As in embodiment 1 or embodiment 2 described above, in this method according to embodiment 3, the UE derives DL reception or UL transmission operation in any SBFD slot or symbol according to the PDSCH/PUSCH scheduling control information of the base station or reference signal transmission/reception configuration information such as CSI-RS or SRS, without the base station setting or indicating a separate link direction for the SBFD slot or symbol for any UE. In other words, for all the SBFD slots or SBFD symbols, the UE may define flexible symbol operation as a baseline operation and perform DL reception or UL transmission operation according to the PDSCH/PUSCH scheduling control information or reference signal transmission/reception configuration information of the base station.

Alternatively, in the method according to embodiment 3, when the existing slot format configuration (e.g., *'tdd-UL-DL-ConfigurationCommon*') or UE-specific RRC signaling (*'tdd-UL-DL-ConfigurationDedicated* ') and reverse link direction support in the DL/UL slot or symbol set or indicated by DCI format 2_0, such as subband for SBFD operation support (e.g., UL subband set in DL slot or symbol or DL subband set in the UL slot or symbol, or UL or DL subband set in the flexible symbol) is configured, the reverse link operation through the corresponding subband is performed as a baseline. In other words, in the method according to embodiment 3, when a UL subband configuration is made for the SBFD operation in the slot or symbol allocated or indicated through DL in any UE, the corresponding UE performs the UL transmission operation in the corresponding SBFD slot or symbol as the baseline.

With regard to embodiments 1 to 3 described above, each embodiment is included in the scope of the disclosure, not only in the case of being independent, but also in the case of all examples constituted of a combination of embodiments.

Hereinafter, configurations of a UE and a base station which may perform all or some of the embodiments described above in connection with FIGS. 1 to 12 are described with reference to the drawings. To avoid redundancy, repeated portions of the above description may be omitted and, in that case, the omitted content is understood to apply equally to the following description unless it contradicts the technical spirit of the invention.

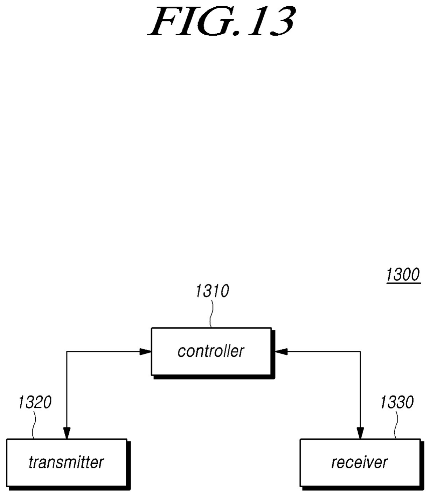

FIG. 13 is a block diagram illustrating a UE 1300 according to an embodiment.

Referring to FIG. 13, a UE 1300 according to an includes a transmitter 1320, a receiver 1330, and a controller 1310 controlling operations of the transmitter and the receiver.

The controller 1310 controls the overall operation of the UE 1300 according to the method for uplink and downlink transmission/reception in full-duplex communication described above.

The controller 1310 may receive configuration information for a downlink slot and downlink symbol, and an uplink slot and uplink symbol. The controller 1310 may receive TDD configuration information for uplink-downlink slot configuration from the base station. In this case, the corresponding slot configuration may be configured on a per-cell basis through higher layer signaling (e.g., cell-specific RRC signaling). In other words, a downlink symbol, an uplink symbol, and a flexible symbol with an undetermined transmission direction during a predetermined period may be configured through an RRC message for configuring a corresponding UL-DL slot.

Further, the controller 1310 may receive UE-specific RRC signaling in which flexible symbols among symbols configured through cell-specific RRC signaling are reallocated to uplink symbols, downlink symbols, or flexible symbols for each UE.

Alternatively, the controller 1310 may receive an indication of a dynamic slot format through a UE-group common PDCCH. According to an embodiment, the UE may dynamically receive the slot format through DCI format 2_0.

The controller 1310 may receive configuration information for a subband and configuration information for a subband full duplex (SBFD) slot or an SBFD symbol for the full-duplex communication. For the TDD carrier, some frequency resources may be utilized for uplink transmission of the UE in any downlink slot or downlink symbol. Or, some frequency resources may be utilized like a flexible symbol for downlink/uplink transition. Alternatively, some frequency resources in any uplink slot or uplink symbol may be configured to be utilized for downlink transmission of the base station. The controller 1310 may receive configuration information for a subband for full-duplex communication from the base station.

The controller 1310 may receive information for the downlink slot or symbol including the uplink subband or the uplink slot or symbol including the downlink subband (e.g., configuration information about the SBFD slot or SBFD symbol which is information about time resources).

The controller 1310 may perform uplink transmission or downlink reception based on transmission direction link configuration information in the SBFD slot or SBFD symbol. In the SBFD slot or SBFD symbol, the controller 1310 may perform uplink transmission through the uplink subband or perform downlink reception through the downlink subband. Accordingly, the controller 1310 may obtain transmission direction link configuration information for determining whether to perform uplink transmission or downlink reception in the SBFD slot or SBFD symbol.

According to an embodiment, the transmission direction link configuration information in the SBFD slot or SBFD symbol may be configured through cell-specific higher layer signaling or UE-specific higher layer signaling. As described above, in addition to RRC signaling configuring uplink slots and downlink slots in an existing TDD system, the transmission direction link configuration information for configuring uplink or downlink for SBFD slots or symbols may be further configured. In this case, the controller 1310 may receive the transmission direction link configuration information through cell-specific RRC signaling or UE-specific RRC signaling.

Transmission direction link configuration information may be received through separate cell-specific RRC signaling or UE-specific RRC signaling. Alternatively, the transmission direction link configuration information may be included and received in an RRC message including the above-described configuration information for subbands for full-duplex communication. Alternatively, an information area for configuring SBFD-UL, SBFD-DL, or SBFD-flexible for the SBFD slot or SBFD symbol may be further included in the above-described RRC message for configuring the uplink-downlink slot.

In other words, when receiving transmission direction link configuration information set as SBFD-DL in the SBFD slot or SBFD symbol by the base station, the controller 1310 may perform a downlink reception operation through the downlink subband in the corresponding SBFD slot or SBFD symbol. Similarly, when receiving the transmission direction link configuration information set as SBFD-UL in the SBFD slot or SBFD symbol by the base station, the controller 1310 may perform an uplink transmission operation through the uplink subband in the corresponding SBFD slot or SBFD symbol. Alternatively, when receiving the transmission direction link configuration information set to SBFD-flexible by the base station in the SBFD slot or SBFD symbol, the controller 1310 may operate in the same manner as in existing flexible symbols in the corresponding SBFD slot or SBFD symbol.

According to another embodiment, the transmission direction link configuration information in the SBFD slot or SBFD symbol may be indicated through physical layer (L1) control signaling for an SBFD symbol-only slot format indication. The controller 1310 may dynamically receive an indication of the SBFD slot format for the SBFD slot or SBFD symbol through L1 control signaling from the base station. In other words, the base station may transmit downlink control information (DCI) to indicate SBFD-DL, SBFD-UL, or SBFD-flexible for the SBFD slot or SBFD symbol to the UE. In this case, a separate DCI format for indicating the SBFD slot format may be configured.

This DCI format may include SBFD-DL, SBFD-UL, or SBFD-flexible indication information, in slot or symbol units, for SBFD slots or symbols in the period based on the configuration period of the uplink subband or the downlink subband.

Alternatively, regardless of the configuration period of the subband for SBFD operation, a monitoring period for a separate SBFD slot format indication DCI may be set by the base station. Even in this case, SBFD-DL, SBFD-UL, and SBFD-flexible indication information may be transmitted for all the SBFD slots or SBFD symbols in the separately set period.

Alternatively, without defining a separate DCI format for SBFD slot format indication, slot format indication information in the SBFD slot may be transmitted through the existing DCI format 2_0 for slot format indication. In other words, if the base station indicates the slot format in the SBFD slot through DCI format 2_0 in the same manner as conventional, the controller 1310 may determine whether to perform downlink reception or uplink transmission in the corresponding SBFD slot.

When receiving an indication of transmission direction link configuration information set as SBFD-DL in the SBFD slot or SBFD symbol by the base station, the controller 1310 may perform a downlink reception operation through the downlink subband in the corresponding SBFD slot or SBFD symbol. Similarly, when receiving an indication of the transmission direction link configuration information set as SBFD-UL in the SBFD slot or SBFD symbol by the base station, the controller 1310 may perform an uplink transmission operation through the uplink subband in the corresponding SBFD slot or SBFD symbol. Alternatively, when receiving the transmission direction link configuration information set to SBFD-flexible in the SBFD slot or SBFD symbol, the controller 1310 may operate in the same manner as in existing flexible symbols in the corresponding SBFD slot or SBFD symbol.

According to another embodiment, the transmission direction link configuration information in the SBFD slot or SBFD symbol may be determined based on scheduling control information including downlink assignment control information or uplink grant control information.

In this case, according to the PDSCH/PUSCH scheduling control information of the base station or reference signal transmission/reception configuration information such as CSI-RS, SRS, or likes, the controller 1310 may determine downlink reception or uplink transmission operation in the SBFD slot or SBFD symbol. In other words, for all the SBFD slots or SBFD symbols, the controller 1310 may define flexible symbol operation as a baseline operation and perform downlink reception or uplink transmission according to the PDSCH/PUSCH scheduling control information or reference signal transmission/reception configuration information of the base station.

According to an embodiment, different transmission directions in the SBFD slot or SBFD symbol may be set according to each of the higher layer signaling and scheduling control information. In other words, in the event of a conflict between transmission direction link configuration information set according to higher layer signaling and transmission direction link configuration information indicated by physical layer (L1) control signaling for at least one SBFD symbol, the controller 1310 may perform uplink transmission or downlink reception according to the transmission direction link configuration information indicated by the physical layer (L1) control signaling.

In other words, the controller 1310 may be configured to perform uplink transmission or downlink reception based on the priority determined according to the signaling method. For example, L1 control signaling transmitted through PDCCH may be configured to have priority over RRC signaling set through PDSCH. Alternatively, conversely, RRC signaling configured through PDSCH may be set to have priority over L1 control signaling transmitted through PDCCH.

Alternatively, the controller 1310 may be configured to perform uplink transmission or downlink reception based on the priority determined according to the timing of the configuration or indication. For example, the most recently made configuration or indication may be set to have priority.

According to the embodiments described above, uplink and downlink transmission/reception may be performed efficiently in slots or symbols where full-duplex communication is applied.

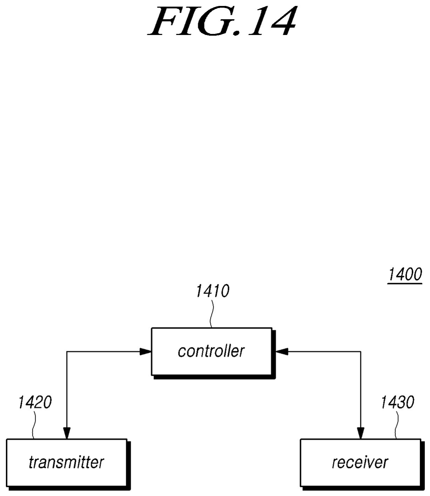

FIG. 14 is a block diagram illustrating a base station 1400 according to an embodiment.

Referring to FIG. 14, a base station 1400 according to an embodiment includes a transmitter 1420, a receiver 1430, and a controller 1410 controlling operations of the transmitter and the receiver.

The controller 1410 controls the overall operation of the base station 1400 according to the method for uplink and downlink transmission/reception in full-duplex communication required to perform the present invention described above. The transmitter 1420 transmits downlink control information and data or messages to the UE via a corresponding channel. The receiver 1430 receives uplink control information and data or messages from the UE via a corresponding channel.

The controller 1410 may transmit configuration information for a downlink slot and downlink symbol, and an uplink slot and uplink symbol. The controller 1410 may transmit TDD configuration information for uplink-downlink slot configuration to the UE. In this case, the corresponding slot configuration may be configured on a per-cell basis through higher layer signaling (e.g., cell-specific RRC signaling). In other words, a downlink symbol, an uplink symbol, and a flexible symbol with an undetermined transmission direction during a predetermined period may be configured through an RRC message for configuring a corresponding UL-DL slot.

Further, the controller 1410 may transmit UE-specific RRC signaling in which flexible symbols among symbols configured through cell-specific RRC signaling are reallocated to uplink symbols, downlink symbols, or flexible symbols for each UE.

Alternatively, the controller 1410 may indicate a dynamic slot format through a UE-group common PDCCH to the UE. According to an embodiment, the base station may dynamically indicate the slot format through DCI format 2_0.

The controller 1410 may transmit configuration information about a subband and configuration information about a subband full duplex (SBFD) slot or an SBFD symbol for the full-duplex communication. The controller 1410 may transmit information about the downlink slot or symbol including the uplink subband or the uplink slot or symbol including the downlink subband, i.e., configuration information about the SBFD slot or SBFD symbol which is information about time resources. In other words, the controller 1410 may transmit information about the slot or symbol in which an uplink subband is configured among downlink slots or symbols allocated to the UE. Alternatively, the controller 1410 may transmit information about the slot or symbol in which a downlink subband is configured among uplink slots or symbols allocated to the UE.

The controller 1410 may perform uplink reception or downlink transmission based on transmission direction link configuration information in the SBFD slot or SBFD symbol. In the SBFD slot or SBFD symbol, the controller 1410 may perform uplink reception through the uplink subband or perform downlink transmission through the downlink subband. Accordingly, the UE may obtain transmission direction link configuration information for determining whether to perform uplink transmission or downlink reception in the SBFD slot or SBFD symbol.

According to an embodiment, the transmission direction link configuration information in the SBFD slot or SBFD symbol may be configured through cell-specific higher layer signaling or UE-specific higher layer signaling. As described above, in addition to RRC signaling configuring uplink slots and downlink slots in an existing TDD system, the transmission direction link configuration information for configuring uplink or downlink for SBFD slots or symbols may be further configured. In this case, the controller 1410 may transmit the transmission direction link configuration information through cell-specific RRC signaling or UE-specific RRC signaling.

Transmission direction link configuration information may be transmitted through separate cell-specific RRC signaling or UE-specific RRC signaling. Alternatively, the transmission direction link configuration information may be included and received in an RRC message including the above-described configuration information for subbands for full-duplex communication. Alternatively, an information area for configuring SBFD-UL, SBFD-DL, or SBFD-flexible for the SBFD slot or SBFD symbol may be further included in the above-described RRC message for configuring the uplink-downlink slot.

In other words, when transmission direction link configuration information set as SBFD-DL is transmitted in the SBFD slot or SBFD symbol, the controller 1410 may perform a downlink transmission operation through the downlink subband in the corresponding SBFD slot or SBFD symbol. Likewise, when transmission direction link configuration information set as SBFD-UL is transmitted in the SBFD slot or SBFD symbol, the controller 1410 may perform an uplink reception operation through the uplink subband in the corresponding SBFD slot or SBFD symbol. Alternatively, when the transmission direction link configuration information set to SBFD-flexible is transmitted in the SBFD slot or SBFD symbol, the controller 1410 may operate in the same manner as in existing flexible symbols in the corresponding SBFD slot or SBFD symbol.

According to another embodiment, the transmission direction link configuration information in the SBFD slot or SBFD symbol may be indicated through physical layer (L1) control signaling for an SBFD symbol-only slot format indication. The controller 1410 may dynamically indicate, to the UE, the SBFD slot format for the SBFD slot or SBFD symbol through L1 control signaling from the controller 1410. In other words, the controller 1410 may transmit downlink control information (DCI) to indicate SBFD-DL, SBFD-UL, or SBFD-flexible for the SBFD slot or SBFD symbol to the UE. In this case, a separate DCI format for indicating the SBFD slot format may be configured.

This DCI format may include SBFD-DL, SBFD-UL, or SBFD-flexible indication information, in slot or symbol units, for SBFD slots or symbols in the period based on the configuration period of the uplink subband or the downlink subband. For example, the DCI format for indicating the SBFD slot format may be transmitted by the controller 1410 on a subband configuration period basis and monitored by the UE. In this case, the DCI format may indicate SBFD-DL, SBFD-UL, or SBFD-flexible for all the symbols constituting the corresponding SBFD slot or SBFD symbols for all the SBFD slots in the corresponding period.

Alternatively, regardless of the configuration period of the subband for SBFD operation, a monitoring period for a separate SBFD slot format indication DCI may be set by the controller 1410. Even in this case, SBFD-DL, SBFD-UL, and SBFD-flexible indication information may be transmitted for all the SBFD slots or SBFD symbols in the separately set period.

To indicate the SBFD slot format through DCI, an SBFD slot format table including SBFD-DL, SBFD-UL, or SBFD-flexible configuration information of 14 symbol units constituting one SBFD slot may be configured. In this case, in the table, SBFD-DL, SBFD-UL, or SBFD-flexible information may be configured for each index, and the index in the table may be indicated through the corresponding DCI format.

Alternatively, through a DCI format for indicating the SBFD slot format, SBFD-DL, SBFD-UL, or SBFD-flexible indication information may be directly transmitted in symbol units in the SBFD slot.

Alternatively, without defining a separate DCI format for SBFD slot format indication, slot format indication information in the SBFD slot may be transmitted through the existing DCI format 2_0 for slot format indication. In other words, if the controller 1410 indicates the slot format in the SBFD slot through DCI format 2_0 in the same manner as conventional, the UE may determine whether to perform downlink reception or uplink transmission in the corresponding SBFD slot.

In other words, when indicating transmission direction link configuration information set as SBFD-DL in the SBFD slot or SBFD symbol, the controller 1410 may perform a downlink transmission operation through the downlink subband in the corresponding SBFD slot or SBFD symbol. Likewise, when indicating transmission direction link configuration information set as SBFD-UL in the SBFD slot or SBFD symbol, the controller 1410 may perform an uplink reception operation through the uplink subband in the corresponding SBFD slot or SBFD symbol. Alternatively, when transmitting the transmission direction link configuration information set to SBFD-flexible in the SBFD slot or SBFD symbol, the controller 1410 may operate in the same manner as in existing flexible symbols in the corresponding SBFD slot or SBFD symbol.

According to another embodiment, the transmission direction link configuration information in the SBFD slot or SBFD symbol may be determined based on scheduling control information including downlink assignment control information or uplink grant control information.

In this case, according to the PDSCH/PUSCH scheduling control information of the base station or reference signal transmission/reception configuration information such as CSI-RS, SRS, or likes, the UE may determine downlink reception or uplink transmission operation in the SBFD slot or SBFD symbol. In other words, for all the SBFD slots or SBFD symbols, the UE may define flexible symbol operation as a baseline operation and perform downlink reception or uplink transmission according to the PDSCH/PUSCH scheduling control information or reference signal transmission/reception configuration information of the base station.

According to an embodiment, different transmission directions in the SBFD slot or SBFD symbol may be set according to each of the higher layer signaling and scheduling control information. In other words, in the event of a conflict between transmission direction link configuration information set according to higher layer signaling and transmission direction link configuration information indicated by physical layer (L1) control signaling for at least one SBFD symbol, the base station may perform uplink reception or downlink transmission according to the transmission direction link configuration information indicated by the physical layer (L1) control signaling.

In other words, the controller 1410 may be configured to perform uplink reception or downlink transmission based on the priority determined according to the signaling method. For example, L1 control signaling transmitted through PDCCH may be set to have priority over RRC signaling configured through PDSCH. Alternatively, conversely, RRC signaling configured through PDSCH may be set to have priority over L1 control signaling transmitted through PDCCH.

Alternatively, the controller 1410 may be configured to perform uplink reception or downlink transmission based on the priority determined according to the timing of the configuration or indication. For example, the most recently made configuration or indication may be set to have priority.

According to the embodiments described above, uplink and downlink transmission/reception may be performed efficiently in slots or symbols where full-duplex communication is applied.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the present disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the present disclosure shall be construed on the basis of the accompanying claims in such a manner that all of the technical ideas included within the scope equivalent to the claims belong to the present disclosure.

### CROSS-REFERENCE TO RELATED APPLICATION

This application claims priority under 35 U.S.C. § 119(a) to Korean Patent Application No. 10-2023-0001985, filed on January 5, 2023, and Korean Patent Application No. 10-2024-0001787, filed on January 4, 2024, the entire contents of which are incorporated herein by reference. Furthermore, this application claims priority to the above-identified Korean applications and any corresponding applications filed in countries other than the United States, and the entire contents of all such applications are also incorporated herein by reference.

## Claims

1. A method for performing uplink transmission or downlink reception by a user equipment (UE) in full-duplex communication, the method comprising:
receiving configuration information about a downlink slot and a downlink symbol and an uplink slot and an uplink symbol;
receiving configuration information about a subband and configuration information about a subband full duplex (SBFD) slot or an SBFD symbol for the full-duplex communication; and
performing uplink transmission or downlink reception based on transmission direction link configuration information in the SBFD slot or the SBFD symbol.

2. The method of claim 1, wherein the transmission direction link configuration information in the SBFD slot or the SBFD symbol is configured through cell-specific higher layer signaling or UE-specific higher layer signaling.

3. The method of claim 1, wherein the transmission direction link configuration information in the SBFD slot or the SBFD symbol is indicated through physical layer (L1) control signaling for SBFD symbol-only slot format indication.

4. The method of claim 1, wherein the transmission direction link configuration information in the SBFD slot or the SBFD symbol is determined based on scheduling control information including downlink assignment control information or uplink grant control information.

5. The method of claim 1, wherein performing the uplink transmission or the downlink reception performs the uplink transmission or the downlink reception according to transmission direction link configuration information indicated according to physical layer (L1) control signaling when transmission direction link configuration information configured according to higher layer signaling and the transmission direction link configuration information indicated by the physical layer (L1) control signaling conflict with each other for at least one SBFD symbol.

6. A method for performing uplink reception or downlink transmission by a base station in full-duplex communication, the method comprising:
transmitting configuration information about a downlink slot and a downlink symbol and an uplink slot and an uplink symbol;
transmitting configuration information about a subband and configuration information about a subband full duplex (SBFD) slot or an SBFD symbol for the full-duplex communication; and
performing uplink reception or downlink transmission based on transmission direction link configuration information in the SBFD slot or the SBFD symbol.

7. The method of claim 6, wherein the transmission direction link configuration information in the SBFD slot or the SBFD symbol is configured through cell-specific higher layer signaling or UE-specific higher layer signaling.

8. The method of claim 6, wherein the transmission direction link configuration information in the SBFD slot or the SBFD symbol is indicated through physical layer (L1) control signaling for SBFD symbol-only slot format indication.

9. The method of claim 6, wherein the transmission direction link configuration information in the SBFD slot or the SBFD symbol is determined based on scheduling control information including downlink assignment control information or uplink grant control information.

10. The method of claim 6, wherein performing the uplink reception or the downlink transmission performs the uplink reception or the downlink transmission according to transmission direction link configuration information indicated according to physical layer (L1) control signaling when transmission direction link configuration information configured according to higher layer signaling and the transmission direction link configuration information indicated by the physical layer (L1) control signaling conflict with each other for at least one SBFD symbol.

11. A UE performing uplink transmission or downlink reception in full-duplex communication, comprising:
a transmitter;
a receiver; and
a controller controlling an operation of the transmitter and the receiver, wherein the controller:
receives configuration information about a downlink slot and a downlink symbol and an uplink slot and an uplink symbol;
receives configuration information about a subband and configuration information about a subband full duplex (SBFD) slot or an SBFD symbol for the full-duplex communication; and
performs uplink transmission or downlink reception based on transmission direction link configuration information in the SBFD slot or the SBFD symbol.

12. The UE of claim 11, wherein the transmission direction link configuration information in the SBFD slot or the SBFD symbol is configured through cell-specific higher layer signaling or UE-specific higher layer signaling.

13. The UE of claim 11, wherein the transmission direction link configuration information in the SBFD slot or the SBFD symbol is indicated through physical layer (L1) control signaling for SBFD symbol-only slot format indication.

14. The UE of claim 11, wherein the transmission direction link configuration information in the SBFD slot or the SBFD symbol is determined based on scheduling control information including downlink assignment control information or uplink grant control information.

15. The UE of claim 11, wherein the controller performs the uplink transmission or the downlink reception according to transmission direction link configuration information indicated according to physical layer (L1) control signaling when transmission direction link configuration information configured according to higher layer signaling and the transmission direction link configuration information indicated by the physical layer (L1) control signaling conflict with each other for at least one SBFD symbol.
